# EUROPEAN PATENT APPLICATION

(11) **EP 2 423 470 A2**
(43) Date of publication of application: **29.02.2012**
(21) Application number: 10156241.1
(22) Date of filing: 11.03.2010
(51) Int. Cl.: F01K 23/10, F02C 6/18

(54) **Continuous combined cycle operation power plant and method**

(30) Priority: 16.03.2009 US 404522
(71) Applicant: General Electric Company, Schenectady, NY 12345 (US)
(72) Inventor: Holt, Joel Donnell, Scotia, NY 12302 (US); Morawski, Christopher John, Albany, NY 12209 (US); O'Connor, Michael James, Simpsonville, SC 29681 (US)
(74) Representative: Gray, Thomas

(57) **Abstract**

A combined cycle power plant (100) includes a gas turbine (102), a steam turbine (110), a generator (104) coupled to the gas turbine (102) and a generator (104) coupled to the steam turbine (110), and an auxiliary boiler (140) operatively coupled to the steam turbine (110). The power plant (100) is continuously operated in a combined cycle mode during operating of the gas turbine (102) by starting the steam turbine (110) first.

## Description

### BACKGROUND OF THE INVENTION

The invention relates generally to a combined cycle power plant technology. More particularly, the invention relates to implementing continuous operation for a combined cycle power plant.

A combined cycle power plant uses a gas turbine and a steam turbine to produce energy. To enhance efficiency, the gas turbine's exhaust gas is used in a waste heat recovery steam generator (HRSG) to create steam, which is then applied to the steam turbine.

One challenge relative to combined cycle plants is that the steam turbine and the gas turbine have drastically different startup requirements. The different startup requirements slow overall plant startup, which results in wasted energy and inefficiencies. To illustrate, during startup of the plant, the gas turbine is always started first. This occurs for at least two reasons. First, it is a relatively smaller machine and becomes operational more quickly than the steam turbine; consequently, the HRSG is also operational soon after the gas turbine is started. Second, the steam required for starting the steam turbine typically requires the gas turbine to be operational, i.e., so that the HRSG generates steam at appropriate conditions. The steam turbine, however, is a relatively large machine and is more sensitive to changes in temperature during operation. As a result, it must be warmed up in an appropriately gradual manner to avoid excessive stress and the resulting failure. In order to address this issue, a combined cycle power plant must be designed to a specification that limits how quickly the steam turbine temperature can be changed, and limits the number of start ups for the plant over a period of time. Transition points for the steam turbine, e.g., transition to forward flow and stress peak, also sometimes require slowing down the progress of a plant startup due to thermal transients. As a consequence of the limitations posed by the steam turbine startup, the steam generated from the gas turbine's exhaust gas (via the HRSG) cannot all be used immediately, which results in lower efficiency during the steam turbine startup. That is, some of the energy from the gas turbine's burning of fuel in the form of the steam from the HRSG is wasted (condensed back to water) as the steam turbine warms up during start up. The startup time for the entire combined cycle plant is impacted negatively.

The issue of combined cycle start up time has been addressed in a variety of ways. One approach holds the gas turbine at low loads while the steam turbine is warmed up. That is, the gas turbine does not fully power its respective generator. In this case, the gas turbine is fully loaded only when the steam turbine is ready, which is inefficient. In another approach, an auxiliary boiler is provided for steam turbine pre-warming and HRSG pre-warming. The pre-warming provided by the auxiliary boiler is inadequate for starting the steam turbine. This approach also requires the gas turbine load to be reduced until the steam turbine can accept the steam generation from the HRSG, which is inefficient. Yet another approach attempts to 'decouple' the steam turbine from the gas turbine in the start sequence. This approach results in running the gas turbine in a simple cycle mode with few load restrictions while the steam turbine is warmed up and started. This approach requires additional equipment for steam temperature control and valve modification/additions for the steam turbine.

### BRIEF DESCRIPTION OF THE INVENTION

A first aspect of the disclosure provides a combined cycle power plant comprising: a gas turbine coupled to a generator; a steam turbine coupled to a generator; a heat recovery steam generator (HRSG) for generating a first steam flow from exhaust from the gas turbine; an auxiliary boiler operatively coupled to the steam turbine for producing a second steam flow having characteristics appropriate for starting the steam turbine; a first control valve for controlling application of the first steam flow to the steam turbine; a second control valve for controlling application of the second steam flow to the steam turbine; and a controller for continuously operating the plant in a combined cycle during operation of the gas turbine by: starting the steam turbine by controlling the second control valve to apply the second steam flow from the auxiliary boiler to the steam turbine, and then starting the gas turbine and the HRSG, and then applying the first steam flow from the HRSG to the steam turbine.

A second aspect of the disclosure provides a method comprising: providing a combined cycle power plant including a gas turbine, a steam turbine, a generator coupled to the gas turbine and a generator coupled to the steam turbine, and an auxiliary boiler operatively coupled to the steam turbine; generating a first steam flow sufficient for starting the steam turbine using the auxiliary boiler; starting the steam turbine using the first steam flow prior to starting the gas turbine, the starting including controlling a first control valve; starting the gas turbine to attain the combined cycle; generating a second steam flow using exhaust from the gas turbine; and applying the second steam flow to the steam turbine, the applying including controlling a second control valve.

A third aspect of the disclosure provides a method comprising: providing a combined cycle power plant including a gas turbine, a steam turbine, a generator coupled to the gas turbine and a generator coupled to the steam turbine, and an auxiliary boiler operatively coupled to the steam turbine; and continuously operating the combined cycle power plant in a combined cycle mode during operating of the gas turbine.

### BRIEF DESCRIPTION OF THE DRAWINGS

FIG. 1 shows a schematic block diagram of a combined cycle power plant according to embodiments of the disclosure.
FIG. 2 shows a flow diagram of embodiments of a method according to the disclosure.

### DETAILED DESCRIPTION OF THE INVENTION

A combined cycle power plant is described herein that continuously operates in a combined cycle mode during operating of the gas turbine.

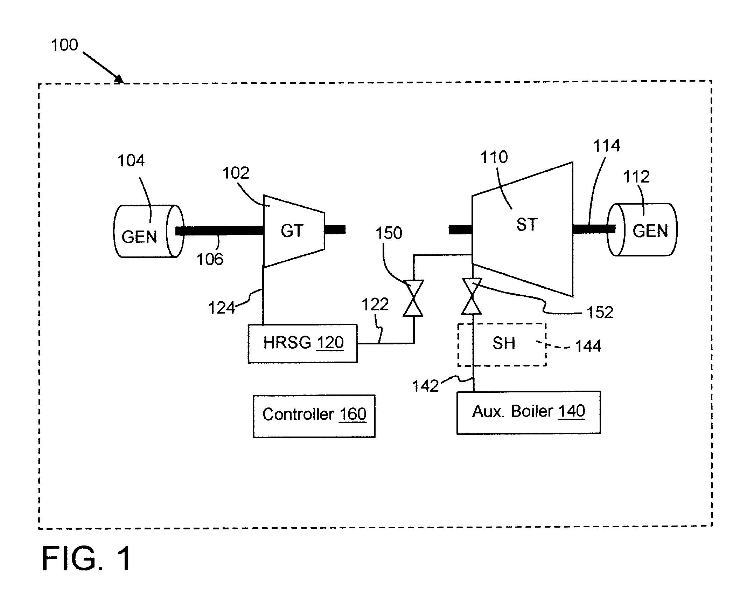

Referring to FIG. 1, an illustrative combined cycle (CC) power plant 100 according to embodiments of the disclosure is illustrated. (Note the power plant shown in FIG. 1 is simplified for descriptive purposes.) In one embodiment, power plant 100 includes one or more gas turbine(s) (GT) 102 coupled to a generator 104. Gas turbine 102 may include any now known or later developed fuel fired turbine(s), and generator 104 may include any now known or later developed electrical generator(s). A rotating shaft 106 operatively couples gas turbine 102 to generator 104 such that power can be generated from the turning of rotating shaft 106 by gas turbine 102. Power plant 100 also may include a steam turbine (ST) 110 coupled to a generator 112. Steam turbine 110 may include any now known or later developed fuel fired turbine, and generator 112 may include any now known or later developed electrical generator. A rotating shaft 114 operatively couples steam turbine 110 to generator 112 such that power can be generated from the turning of rotating shaft 114 by steam turbine 110. Although shown as separate generators 104, 112, it is possible that both turbines 102, 110 power the same generator.

A heat recovery steam generator (HRSG) 120 may be provided for generating a first steam flow 122 from exhaust 124 from gas turbine 102. That is, exhaust 124 from gas turbine 102 is used to heat water to generate a steam flow 122, which is applied to steam turbine 110. HRSG 120 may include any now known or later developed heat exchanger for converting energy from exhaust 124 for heating water into steam flow 122. Note that some steam flow lines between HRSG 120 and steam turbine 110 have been omitted for clarity.

An auxiliary boiler 140 is operatively coupled to steam turbine 110 for producing a second steam flow 142 having characteristics appropriate for starting the steam turbine. Optionally, if necessary, a superheater (SH) 144 may be provided to superheat steam flow 142, e.g., from a saturated steam state created by auxiliary boiler 140. The characteristics of steam flow 142 required to start steam turbine 110 may vary greatly depending on the design of the steam turbine, and may include particular ranges of, for example, pressure, temperature, flow volume, etc. For example, steam turbine 110 may start using a steam flow 142 from the auxiliary boiler of approximately 60,000 pounds (lbs.) per hour or greater of steam, and/or a steam flow including approximately 400 ft³/min or greater of steam. Alternatively, the characteristics of steam flow 142 may be stated in terms of a full operation steam flow rating for the steam turbine. For example, steam turbine 110 may start using a steam flow from the auxiliary boiler of approximately 5% (+/- 0.5%) of a full operation steam flow rating for the steam turbine. In view of the foregoing and that the characteristics of steam flow 142 required to start steam turbine 110 are well within the purview of one with skill in the art to determine, particular characteristics will not be described further herein. In contrast to conventional auxiliary boilers used to pre-warm steam turbine 110 and/or HRSG 120, auxiliary boiler is substantially larger. For example, auxiliary boiler 140 may output approximately 100,000 lbs. per hour, which is three times the size of an auxiliary boiler used to pre-warm steam turbine 110 and/or HRSG 120.

Power plant 100 also includes a first control valve 150 for controlling application of first steam flow 122 to steam turbine 110, and a second control valve 152 for controlling application of second steam flow 142 to the steam turbine. First and second control valve 150, 152 may include any now known or later developed control valve capable of being at least electro-hydraulic controlled and capable of withstanding the conditions of the steam passing therethrough.

A controller 160 controls operation of power plant 100 and, in particular, continuously operates the plant in a combined cycle during operation of gas turbine 102 by: starting steam turbine 110 by controlling second control valve 152 to apply second steam flow 142 from auxiliary boiler 140 to the steam turbine, then starting gas turbine 102 and HRSG 120, and then applying first steam flow 122 from HRSG 120 to the steam turbine. (Connection lines to each component from controller 160 have been omitted for clarity sake). Controller 160 may include a computerized control system electrically linked to each component and capable of controlling any mechanisms that control operation of each component, e.g., control valves 150, 152.

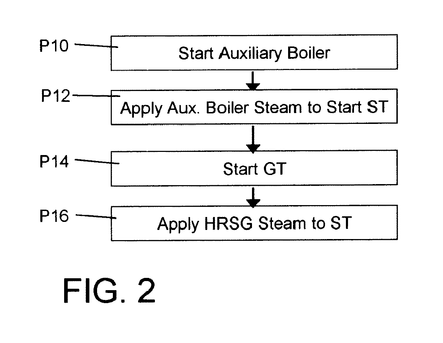

Referring to FIG. 2, a flow diagram further illustrating the methodology according to embodiments of the invention is illustrated. In process P10, auxiliary boiler 140 generates steam flow 142 sufficient for starting steam turbine 110. In contrast to conventional CC power plant startup, in process P12, steam turbine 110 is started using steam flow 142 prior to starting gas turbine 102. Starting of steam turbine 110 may include any other conventional techniques such as pre-warming by applying steam to adjust temperature, opening of other control valves, initiating turning of rotating shaft 114, etc., as may be controlled by controller 160. In one embodiment, steam turbine 110 is started using intermediate pressure (IP) steam (e.g., approximately 150 - 800 PSI), which may be superheated by superheater 144. Then, in process P 14, gas turbine 102 is started to attain the combined cycle. Gas turbine 102 may be started using any other conventional techniques such as opening of fuel supply valves, performing ignition protocols, initiating turning of rotating shaft 104, etc., as may be controlled by controller 160. Once gas turbine 102 is running, HRSG 120 begins to produce steam, after which steam lines may be pre-warmed and steam temperatures established within limits. In process P 16, exhaust 124 from gas turbine 102 may be used to generate steam flow 122 (by applying to HRSG 120), which may then be applied to steam turbine 110, via control valve 150.

Since steam turbine 110 is started prior to the start of gas turbine 102, power plant 100 continuously operates in a combined cycle mode during operating of the gas turbine. Consequently, the need to waste available energy from steam flow 122 generated by gas turbine 102 via HRSG 120 is no longer an issue. Further, overall plant startup time is reduced while increasing startup efficiency and improving the total daily heat rate, which makes combined cycle power plant 100 more competitive and allows it to operate more often.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context, (e.g., includes the degree of error associated with measurement of the particular quantity). The suffix "(s)" as used herein is intended to include both the singular and the plural of the term that it modifies, thereby including one or more of that term (e.g., the metal(s) includes one or more metals). Ranges disclosed herein are inclusive and independently combinable (e.g., ranges of "up to about 25 wt%, or, more specifically, about 5 wt% to about 20 wt %", is inclusive of the endpoints and all intermediate values of the ranges of "about 5 wt% to about 25 wt%," etc).

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A combined cycle power plant (100) comprising:
a gas turbine (102) coupled to a generator (104);
a steam turbine (110) coupled to a generator (104);
a heat recovery steam generator (104) (HRSG (120) for generating a first steam flow (122) from exhaust (124) from the gas turbine (102);
an auxiliary boiler (140) operatively coupled to the steam turbine (110) for producing a second steam flow (142) having characteristics appropriate for starting the steam turbine (110);
a first control valve (150) for controlling application of the first steam flow (122) to the steam turbine (110);
a second control valve (152) for controlling application of the second steam flow (142) to the steam turbine (110); and
a controller (160) for continuously operating the power plant (100) in a combined cycle mode during operation of the gas turbine (102) by:
starting the steam turbine (110) by controlling the second control valve (152) to apply the second steam flow (142) from the auxiliary boiler (140) to the steam turbine (110), and then
starting the gas turbine (102) and the HRSG (120), and then
applying the first steam flow (122) from the HRSG (120) to the steam turbine (110).

2. The power plant of claim 1, wherein the steam turbine (110) starts using a steam flow from the auxiliary boiler (140) of approximately 100,000 lbs. per hour or greater of steam.

3. The power plant of claim 1 or claim 2, wherein the steam turbine (110) starts using a steam flow from the auxiliary boiler (140) of approximately 5% of a full operation steam flow rating for the steam turbine (110).

4. The power plant of any one of the preceding claims, wherein the auxiliary boiler (140) outputs approximately 100,000 lbs. per hour.

5. A method comprising:
providing a combined cycle power plant (100) including a gas turbine (102), a steam turbine (110), a generator (104) coupled to the gas turbine (102) and a generator (104) coupled to the steam turbine (110), and an auxiliary boiler (140) operatively coupled to the steam turbine (110);
generating a first steam flow (122) sufficient for starting the steam turbine (110) using the auxiliary boiler (140);
starting the steam turbine (110) using the first steam flow (122) prior to starting the gas turbine (102), the starting including controlling a first control valve (150);
starting the gas turbine (102) to attain the combined cycle;
generating a second steam flow (142) using exhaust (124) from the gas turbine (102); and
applying the second steam flow (142) to the steam turbine (110), the applying including controlling a second control valve (152).

6. The method of claim 5, wherein the using the exhaust (124) includes applying the exhaust (124) to a heat recovery steam generator (104).

7. The method of claim 5 or claim 6, wherein the steam turbine (110) starts using a steam flow from the auxiliary boiler (140) including approximately 60,000 lbs. per hour or greater of steam.

8. The method of any one of claims 5 to 7, wherein the steam turbine (110) starts using a steam flow from the auxiliary boiler (140) of approximately 5% of a full operation steam flow rating for the steam turbine (110).

9. The method of any one of claims 5 to 8, wherein the auxiliary boiler (140) outputs approximately 100,000 lbs. per hour.

10. A method comprising:
providing a combined cycle power plant (100) including a gas turbine (102), a steam turbine (110), a generator (104) coupled to the gas turbine (102) and a generator (104) coupled to the steam turbine (110), and an auxiliary boiler (140) operatively coupled to the steam turbine (110); and
continuously operating the combined cycle power plant (100) in a combined cycle mode during operating of the gas turbine (102).

11. The method of claim 10, wherein the continuously operating includes:
generating a first steam flow (122) sufficient for starting the steam turbine (110) using the auxiliary boiler (140);
starting the steam turbine (110) using the first steam flow (122) prior to starting the gas turbine (102); and
starting the gas turbine (102) to begin the combined cycle operating.

12. The method of claim 10 or claim 11, further comprising:
using exhaust (124) from the gas turbine (102) to generate a second steam flow (142); and
applying the second steam flow (142) to the steam turbine (110).

13. The method of claim 12, wherein the using of the exhaust (124) includes applying the exhaust (124) to a heat recovery steam generator (104).

14. The method of any one of claims 10 to 13, wherein the steam turbine (110) starts using a steam flow from the auxiliary boiler (140) including approximately 100,000 lbs. per hour or greater of steam.

15. The method of any one of claims 10 to 14, wherein the steam turbine (110) starts using a steam flow from the auxiliary boiler (140) of approximately 5% of a full operation steam flow rating for the steam turbine (110).
